# EUROPÄISCHE PATENTANMELDUNG

(11) **EP 0 829 589 A2**
(43) Veröffentlichungstag der Anmeldung: **18.03.1998**
(21) Anmeldenummer: 97115599.9
(22) Anmeldetag: 09.09.1997
(51) Int. Cl.: E04B 7/20, E04D 3/35

(54) **Vorrichtung zum abschnittsweisen Auftragen eines Trennmittels auf die Innenseite eines unteren Profilblechbandes in einer Anlage zur Herstellung von Sandwich-Dachelementen**

(30) Priorität: 16.09.1996 DE 19637673
(71) Anmelder: HOESCH SIEGERLANDWERKE GmbH, 57078 Siegen (DE)
(72) Erfinder: Buch, Hans-Jürgen, 57223 Kreuztal (DE); Clemens, Heinz-Willi, 57482 Wenden (DE); Krämer, Stefan, 57223 Kreuztal (DE); Reuter, Manfred, 04416 Gaschwitz (DE); Sydow, Jochen, 58540 Meinerzhagen (DE)
(74) Vertreter: Pürckhauer, Rolf, Dipl.-Ing.

(57) **Zusammenfassung**

Bei aus Sandwich-Dachelementen erstellten Dächern sind Querstöße der Dachelemente erforderlich, wenn die Abmessung vom First zur Traufe größer ist als die maximale Produktionslänge der Dachelemente, die in entsprechenden Anlagen kontinuierlich gefertigt werden. Bei einem überlappenden Querstoß zweier Dachelemente wird ein Abschnitt der oberen Deckschale des traufseitigen Dachelementes durch die obere Deckschale des firstseitigen Dachelementes überdeckt. Zu diesem Zweck werden Dachelemente gefertigt, deren untere Deckschale gegenüber der oberen Deckschale verkürzt ist und aus deren Kunststoff-Hartschaumkern an der Querkante mit der verkürzten unteren Deckschale ein Segment des Hartschaumkerns herausgeschnitten wird.

Das Heraustrennen des Hartschaumkernsegments erfolgt mittels eines auf der Innenseite der überstehenden, oberen Deckschale aufkaschierten Folienabschnitts. Die Maschine (36) zum Aufkaschieren von Folienabschnitten (37) quer zur Fertigungsrichtung auf die Innenseite eines unteren profilierten Blechbandes (38), das bei den fertigen Dachelementen die äußere Deckschale bildet, weist einen beim Kaschiervorgang mit dem profilierten Band (38) mitlaufenden und nach dem Aufkaschieren der Folienabschnitte (37) in seine Ausgangsstellung zurückfahrbaren Stempel (47) zum Aufkaschieren der Folienabschnitte (37), eine zusammen mit dem Stempel (47) verfahrbare Abwickelrolle (48) für Folienband (49), eine Greifzange (51) zum Abziehen des Folienbandes (49) von der Abwickelrolle (48) unter den Stempel (47) und ein Messer (52) zum Abschneiden der aufzukaschierenden Folienabschnitte (37) auf.

## Beschreibung

Die Erfindung betrifft eine Vorrichtung zum abschnittsweisen Auftragen eines Trennmittels auf die Innenseite eines unteren Profilblechbandes in einer Anlage zur Herstellung von wärmedämmenden und lastabtragenden Sandwich-Dachelementen mit einem Kunststoff-Hartschaumkern sowie einer unteren und einer oberen Deckschale aus Stahlblech, wobei die Vorrichtung zum Auftragen des Trennmittels vor einer Doppelformstrecke angeordnet ist, die durch ein unteres und ein oberes endloses, angetriebenes Plattenband, zwei Seitendichtketten sowie auf dem unteren Plattenband aufliegende und mit diesem umlaufende, endlose Stützketten gebildet wird, die das untere Profilblechband von zwei mit Profilwalzmaschinen hergestellten, mit Abstand parallel übereinander in die Doppelformstrecke einlaufenden Profilblechbändern gegen den Schäumdruck des Kunststoffs abstützen, der - in Fertigungsrichtung gesehen - hinter der Vorrichtung zum Auftragen des Trennmittels auf das untere Profilblechband vor Eintritt desselben in die Doppelformstrecke auf das Band aufgebracht wird und der den Raum zwischen unterem und oberem Profilblechband in einer Reaktionszone der Doppelformstrecke ausschäumt, und wobei für einen überlappenden Querstoß an einer Querkante der Dachelemente, die von dem aus der Doppelformstrecke austretenden Sandwich-Profilblechstrang abgelängt werden, ein Abschnitt der unteren Deckschale und ein durch die Wirkung des Trennmittels nicht an der oberen Deckschale haftendes Segment des Hartschaumkerns von den Dachelementen abgetrennt werden.

Bei aus Sandwich-Dachelementen erstellten Dächern sind Querstöße der Dachelemente erforderlich, wenn die Abmessng vom First zur Traufe größer ist als die maximale Produktionslänge der Dachelemente, die auf der eingangs beschriebenen, aus der DE 32 27 414 A1 bekannten Anlage gefertigt werden. Bei einem überlappenden Querstoß Zweier angrenzender Sandwich-Dachelemente wird ein Abschnitt der oberen bzw. äußeren Deckschale des traufseitigen Dachelementes durch die obere Deckschale des firstseitigen Dachelementes überdeckt. Zu diesem Zweck werden Sandwich-Dachelemente gefertigt, deren untere bzw. innere Deckschale gegenüber der oberen bzw. äußeren Deckschale an einer Querkante der Dachelemente verkürzt ist und aus deren Kunststoff-Hartschaumkern an der Querkante mit der verkürzten unteren Deckschale ein Segment des Hartschaumkerns herausgeschnitten ist.

Bei der Herstellung derartiger Dachelemente auf einer Anlage der eingangs beschriebenen Art wird mittels einer Vorrichtung, die - in Fertigungsrichtung gesehen - vor einem Schäumportal zum Auftragen eines flüssigen, in der Doppelformstrecke zu einem Hartschaumkern aufschäumenden Kunststoffs auf die Innenseite des unteren Profilblechbandes angeordnet ist, ein flüssiges Trennmittel auf die Abschnitte des unteren Profilblechbandes aufgesprüht, die im Bereich einer Querkante der Dachelemente liegen, die von dem aus der Doppelformstrecke austretenden Sandwich-Profilblechstrang abgelängt werden. Das flüssige Trennmittel bildet Filmstreifen auf der Innenseite des fortlaufend mit einer Profilwalzmaschine gewalzten unteren Profilblechbandes, die bewirken, daß der Kunststoff-Hartschaum nicht an der Innenseite des unteren Profilblechbandes haftet, das bei den von dem Sandwich-Profilblechstrang abgeschnittenen Dachelementen die obere bzw. äußere Deckschale bildet. Diese Trennfilmstreifen erleichtern das Herausbrechen der Hartschaumsegmente an der traufseitigen Querkante der Dachelemente nach dem Absägen eines kurzen Stückes der unteren bzw. inneren Deckschale der Dachelemente und dem Einsägen des Kunststoff-Hartschaumkerns an der Endkante der unteren Deckschale.

Das flüssige Trennmittel hat den Nachteil, daß es mit dem flüssigen Kunststoff, z.B. Polyurethan, der zu einem Hartschaumkern aufschäumt, noch etwas reagiert und Krusten bildet. Diese Krusten müssen abgekratzt werden, um zu gewährleisten, daß bei einem überlappenden Querstoß die obere Deckschale des firstseitigen Dachelementes mit der Innenfläche dicht auf der Außenfläche der oberen Deckschale des traufseitigen Dachelementes aufliegt. Beim Abkratzen der Kruste von der Innenfläche der Deckschale besteht die Gefahr, daß die Lackierung des Stahlblechs beschädigt wird, dadurch ein Rostherd gebildet wird und daß die äußere Deckschale durchrostet und undicht wird. Wird die Kruste nicht sauber von der Innenfläche des firstseitigen Dachelementes abgekratzt, liegen die oberen Deckschalen der Dachelemente nicht dicht aufeinander, so daß Wasser in das Dach eindringen kann. Ein weiterer Nachteil besteht darin, daß man bei dem für das Überlappen der Dachelemente erforderlichen Heraustrennen des Segmentes aus dem Kunststoff-Hartschaumkern diesen zur Vermeidung einer Beschädigung der oberen Deckschale nur bis zu einer bestimmten Tiefe einsägen kann und dann das Kernsegment mit der Hand herausbrechen muß. Schließlich kann bei einer Verunreinigung der Sprühdüsen das Trennmittel nicht maßhaltig auf die Innenseite des unteren Profilblechbandes vor Eintritt desselben in die Doppelformstrecke aufgesprüht werden, und bei einem durch Undichtigkeiten der Düsen verursachten Heruntertropfen von flüssigem Trennmittel auf das untere Profilblechband besteht die Gefahr einer Lunkerbildung in dem Kunststoff-Hartschaumkern, die die Wärmedämmeigenschaften und die Tragfähigkeit der Dachelemente beeinträchtigt.

Der Erfindung liegt die Aufgabe zugrunde, eine Vorrichtung zum zonenweisen Auftragen eines Trennmittels auf die Innenseite eines unteren Profilblechbandes in einer Anlage zur Herstellung von Sandwich-Dachelementen zu entwickeln, die durch einen überlappenden Querstoß verbunden werden, wobei das Trennmittel ein sauberes und einfaches, für einen Überlappstoß in Querrichtung erforderliches Heraustrennen eines Segmentes des Kunststoff-Hartschaumkerns an einer Querkante der Dachelemente ermöglichen soll.

Diese Aufgabe ist erfindungsgemäß gelöst durch eine Vorrichtung mit den Merkmalen des Patentanspruches 1.

Die Unteransprüche beinhalten vorteilhafte und zweckmäßige Weiterbildungen der Erfindung.

Die erfindungsgemäße Maschine für eine Anlage zur Herstellung von Sandwich-Dachelementen, an deren einer Querkante die obere Deckschale über den Kunststoff-Hartschaumkern und die untere Deckschale zur Bildung eines überlappenden Querstoßes beim Verlegen der Dachelemente vorsteht, ermöglicht ein maßhaltiges Aufkaschieren von Folienabschnitten im Abstand der Längen der herzustellenden Dachelemente auf die Innenseite des kontinuierlich durchlaufenden, auf einer Profilwalzmaschine profilierten unteren Blechbandes vor dem Aufsprühen des flüssigen, zu dem Hartschaumkern der Sandwichelemente aufschäumenden Kunststoffs und ein einfaches, schnelles und sauberes Abtrennen der Folienabschnitte zusammen mit den herauszunehmenden Segmenten des Kunststoff-Hartschaumkerns bei den Dachelementen, die von einem kontinuierlich hergestellten Sandwich-Profilblechstrang abgelängt werden, mittels eines in die Folienabschnitte eingearbeiteten Aufreißfadens nach dem Absägen eines Abschnitts der unteren Deckschale und dem Einsägen des Hartschaumkerns. Die Trennfolie gewährleistet, daß beim Abtrennen des Hartschaumkernsegments zusammen mit dem an diesem haftenden Abschnitt der unteren Deckschale von den Dachelementen die Lackierung auf der Innenseite der oberen Deckschale der Dachelemente nicht beschädigt wird und eine saubere Innenfläche der oberen Deckschale zurückbleibt, so daß bei einem überlappenden Querstoß die obere Deckschale des firstseitigen Dachelementes mit der Innenseite unter Zwischenfügen von Dichtband dicht auf der Außenseite der oberen Deckschale des traufseitigen Dachelementes aufliegt.

Die Erfindung ist nachstehend anhand von Zeichnungsfiguren erläutert, die im einzelnen folgendes darstellen:
- Fig. 1: eine Anlage zur Herstellung von Sandwich-Dachelementen,
- Fig. 2: eine vergrößerte Teilquerschnittsdarstellung der Doppelformstrecke der Anlage nach Fig. 1,
- Fig. 3: einen überlappenden Querstoß zweier Dachelemente,
- Fig. 4: eine Stirnansicht und

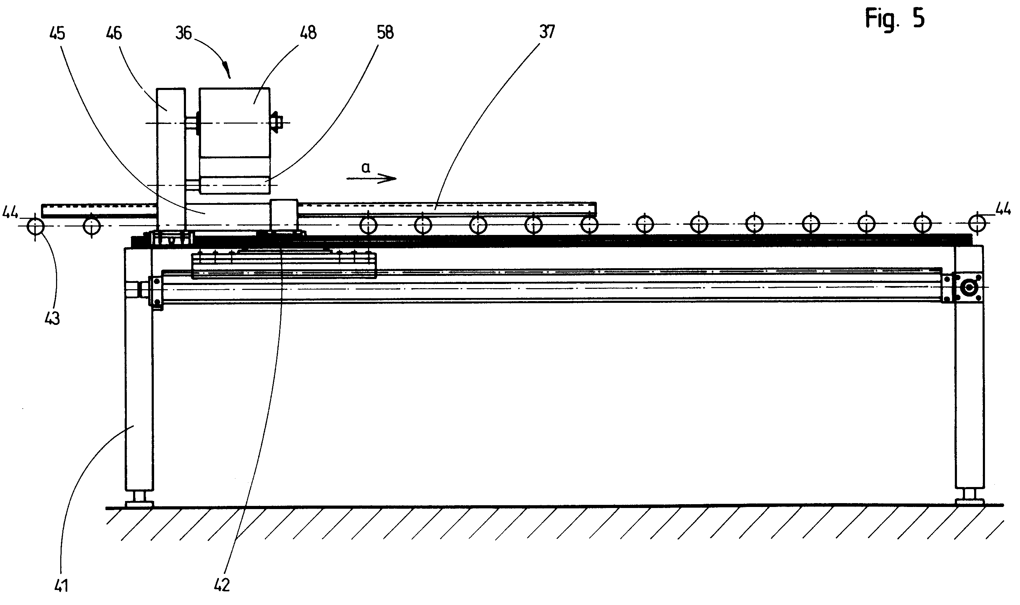

- Fig. 5: eine Seitenansicht einer Maschine zum Aufkaschieren von Trennfolie für die Anlage nach Fig. 1 und

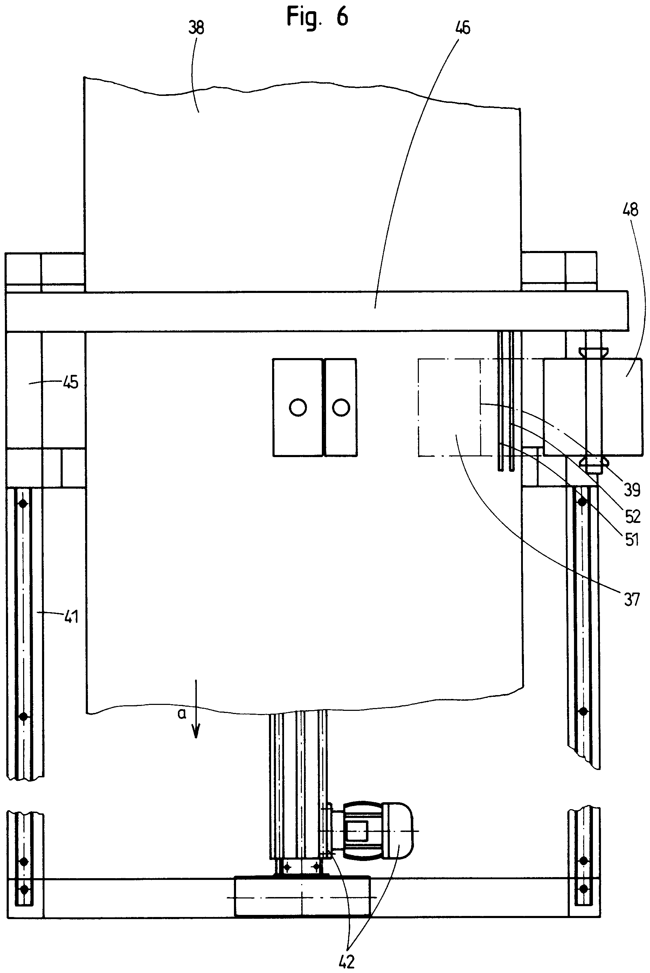

- Fig. 6: eine Teildraufsicht des Grundgestells der Kaschiermaschine gemäß den Fign. 4 und 5.

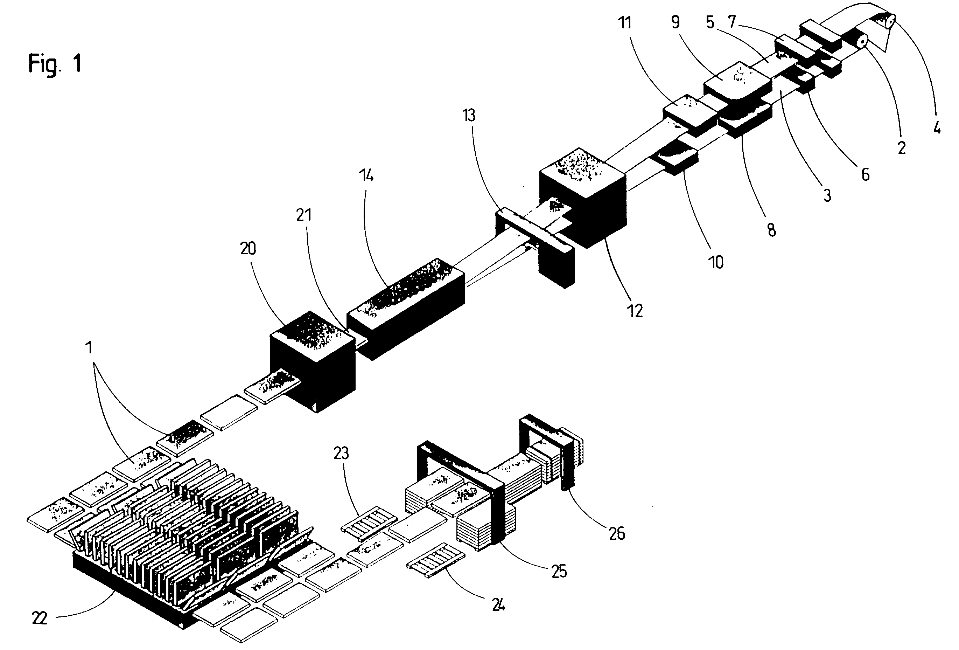

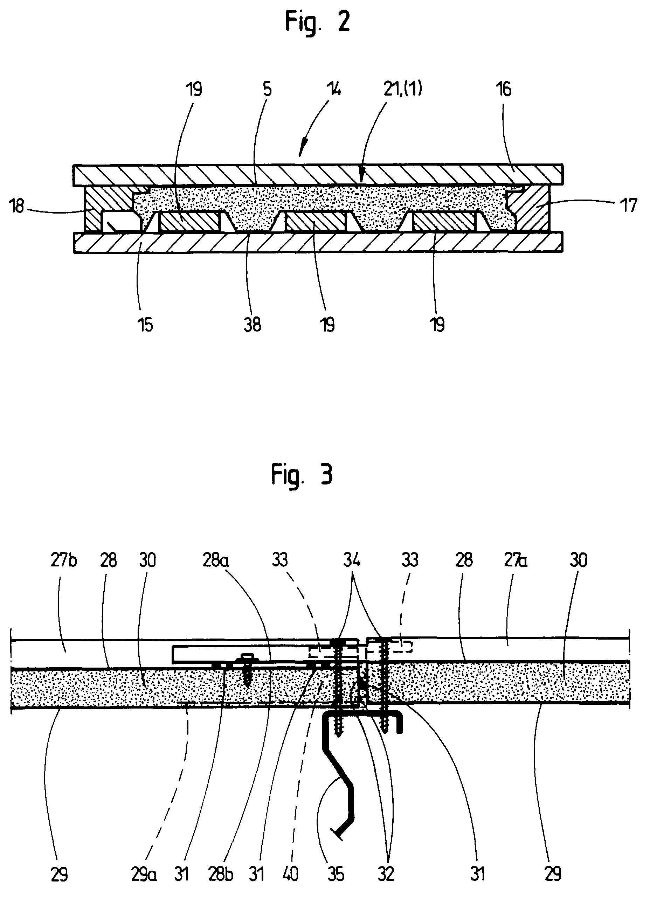

Die Hauptteile der Anlage nach Fig. 1 zur Herstellung von Sandwich-Bauelementen 1 zum Erstellen von wärmedämmenden und lastabtragenden Dächern und Wänden sowie von Toren sind ein Abwickelhaspel 2 für ein unteres Blechband 3 und ein Abwickelhaspel 4 für ein oberes Blechband 5, Verbindungsstationen 6, 7 zur Befestigung des Bandanfangs der auf die Dorne der beiden Abwickelhaspeln 2, 4 aufgeschobenen Coils am Ende des durch die Anlage laufenden unteren 3 und oberen Blechbandes 5, Profilwalzmaschinen 8-11 zur Profilierung der Ränder und der Flächen des unteren 3 und des oberen Blechbandes 5, eine Vorwärmstation 12 zum Erwärmen der beiden profilierten Blechbänder 3, 5, ein Schäumportal 13 zum Aufbringen von schäumfähigem Kunststoff auf die Oberseite des unteren Profilblechbandes 3, eine Doppelformstrecke 14 gemäß Fig. 2 mit einem unteren und einem oberen, endlosen, angetriebenen Plattenband 15, 16, zwei Seitendichtketten 17, 18 sowie mit dem unteren Plattenband 15 umlaufenden endlosen Stützketten 19, wobei die Plattenbänder 15, 16 zusammen mit den Stützketten 19 die mit Abstand parallel übereinander durch die Doppelformstrecke 14 laufenden beiden Profilblechbänder 38,5 gegen den Schäumdruck des in einer Reaktionszone der Doppelformstrecke 14 aufschäumenden Kunststoffs abstützen, eine fliegende Säge 20 zum Abtrennen der Sandwich-Bauelemente 1 mit einer gewünschten Länge von dem aus der Doppelformstrecke 14 austretenden Sandwich-Profilblechstrang 21, eine Kühlstrecke 22 zum Abkühlen der in der Rekationszone der Doppelformstrecke 14 erwärmten Sandwich-Bauelemente 1, eine Vorrichtung 23 zum Zuführen von Paletten 24, eine Anlage 25 zum Stapeln der abgekühlten Sandwich-Bauelemente 1 auf den Paletten 24 sowie ein Automat 26 zum Umreifen der auf den Paletten 24 gestapelten Sandwich-Bauelemente 1.

Fig. 3 zeigt einen überlappenden Querstoß zweier Sandwich-Dachelemente 27a, 27b, deren obere bzw. äußere Deckschalen 28 ein Trapezprofil aufweisen. Die untere Deckschale 29 des firstseitigen Dachelementes 27a ist um ein bestimmtes Maß von beispielsweise 200 mm gegenüber der oberen Deckschale 28 verkürzt, und aus dem Kunststoff-Hartschaumkern 30 des firstseitigen Dachelementes 27a ist ein Segment 40 mit einer der Verkürzung der unteren Deckschale 29 entsprechenden Länge herausgeschnitten. Bei der Verlegung der Dachelemente werden diese an einem Querstoß derart gegeneinandergesetzt, daß die obere Deckschale 28 des firstseitigen Dachelementes 27a mit der Innenseite unter Zwischenfügen von Dichtband 31 dicht auf der Außenseite der oberen Deckschale 28 des traufseitigen Dachelementes 27b aufliegt. Die Stoßkanten 32 der Hartschaumkerne 30 der beiden Dachelemente 27a, 27b, die mittels Haltern 33 und Blechschrauben 34 auf Profilträgern 35 befestigt werden, werden durch ein Dichtband 31 abgedichtet. Der überstehende Abschnitt 28a der oberen Deckschale 28 des firstseitigen Dachelementes 27a wird mit dem überlappten Abschnitt 28b der oberen Deckschale 28 des traufseitigen Dachelementes 27b verschraubt.

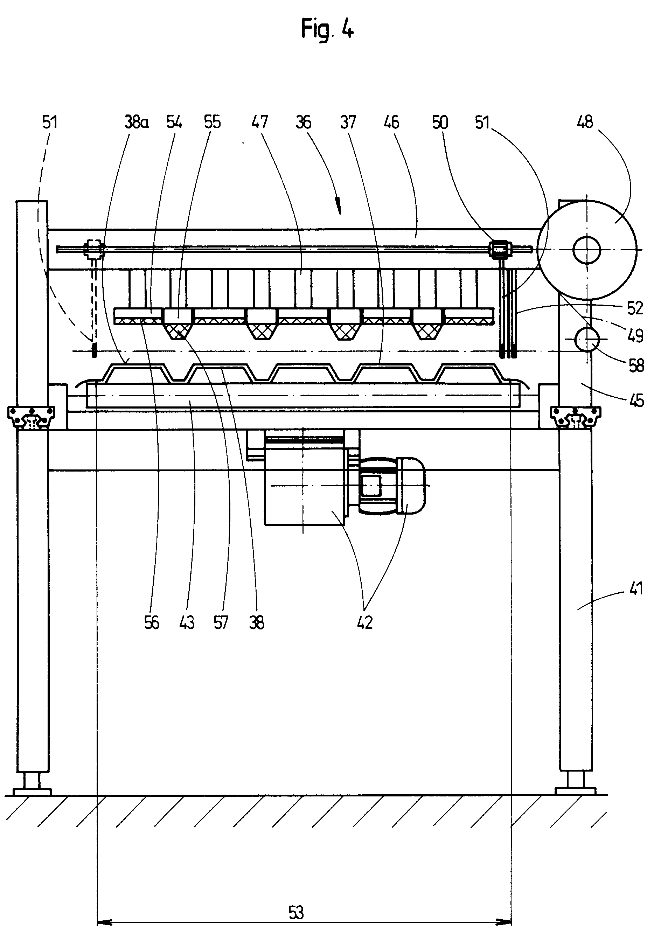

Für die Herstellung von Sandwich-Dachelementen 27a mit einem an einer Querkante über den Hartschaumkern 30 und die untere Deckschale 29 vorstehenden Abschnitt 28a der oberen Deckschale 28 für einen Überlappstoß zweier Dachelemente in Querrichtung wird die Anlage nach Fig. 1 mit einer Maschine 36 zum Aufkaschieren von Folienabschnitten 37 im Abstand der Längen der herzustellenden Dachelemente 27a auf die Innenseite 38a des kontinuierlich durchlaufenden, auf der Profilwalzmaschine 10 aus dem unteren Blechband 3 profilierten Trapezprofilbandes 38 ausgerüstet. Die Kaschiermaschine 36 ist - in Fertigungsrichtung a gesehen - vor dem Schäumportal 13 zum Aufsprühen des flüssigen, zu dem Hartschaumkern 30 der Dachelemente 27a aufschäumenden Kunststoffs angeordnet. In die Folienabschnitte 37 ist ein Aufreißfaden 39 eingearbeitet, der ein sauberes Abtrennen jeweils eines Folienabschnittes 37 zusammen mit dem herauszunehmenden Segment 40 des Kunststoff-Hartschaumkerns 30 und einem Abschnitt 29a der unteren Deckschale 29 bei den Dachelementen 27a, die von dem kontinuierlich hergestellten Sandwich-Profilblechstrang 21 abgelängt,werden nach dem Absägen des Abschnitts 29a der unteren Deckschale 29 und dem Einsägen des Hartschaumkerns 30 ermöglicht (Fign. 3 und 4).

Die Kaschiermaschine 36 weist ein Grundgestell 41 sowie einen auf dem Grundgestell mittels eines Linearantriebs 42 in und entgegen der Fertigungsrichtung a über einem Rollgang 43 für das Trapezprofilband 38 in der Fertigungslinie 44-44 verfahrbaren Wagen 45 mit einem Querrahmen 46 auf. An dem Querrahmen 46 des Wagens 45 sind ein Stempel 47 zum Aufkaschieren der Folienabschnitte 37 auf dem Trapezprofilband 38, eine Abwickelrolle 48 für Folienband 49, ein quer zur Fertigungsrichtung a mittels eines Pneumatikantriebs verfahrbarer Schlitten 50 mit einer Greifzange 51 zum Abziehen des Folienbandes 49 von der Abwickelrolle 48 sowie ein Messer 52 zum Abschneiden der aufzukaschierenden Folienabschnitte 37 von dem von der Abwickelrolle 48 abgezogenen Folienband 49 angeordnet.

Das Messer 52 zum Abschneiden der Folienabschnitte 37 ist entsprechend den verschiedenen Breitenabmessungen 53 des Trapezprofilbandes 38 zur Herstellung unterschiedlich breiter Dachelemente 27a quer zur Fertigungsrichtung a verstellbar.

Der Stempel 47 der Kaschiermaschine 36 besteht aus auswechselbaren Stempelsegmenten 54, 55, deren Form dem Trapezprofilband 38 angepaßt ist, das bei den von dem Sandwich-Profilblechstrang 21 abgelängten Dachelementen 27a die obere Deckschale 28 bildet.

Die Stempelsegmente 54, 55 der Kaschiermaschine 36 weisen Beläge 56 und Ansätze 57 aus einem elastischen Material wie Kunststoff oder Gummi auf und sind pneumatisch angetrieben.

Das Folienband 49 wird mit der Greifzange 51 über eine unter der Abwickelrolle 48 angeordnete Spann- und Umlenkrolle 58 von der Abwickelrolle abgezogen.

In das Folienband 49, das mit einem temperaturbeständigen Kleber beschichtet ist, sind Aufreißfädern 39 mit gleichem Abstand eingearbeitet.

Die Betriebsweise der Kaschiermaschine 36 ist folgende:

Beim Aufkaschieren von Folienabschnitten 37 auf das kontinuierlich gewalzte Trapezprofilband 38 fährt zunächst der Schlitten 50 mit der Greifzange 51, die das Ende eines von der Abwickelrolle 48 abgewickelten kurzen Abschnitts des Folienbandes 49 faßt, quer zur Fertigungsrichtung bzw. Laufrichtung a des Trapezprofilbandes 38 im Abstand über das Profilband, so daß eine bestimmte Länge des Folienbandes 49 von der Abwickelrolle 48 über die Umlenkrolle 58 in den Zwischenraum zwischen dem Stempel 47 und dem über den Rollgang 43 laufenden Trapezprofilband 38 eingezogen wird. Anschließend setzt sich der Wagen 45 in Fertigungsrichtung a mit der gleichen Geschwindigkeit wie das Trapezprofilband 38 in Bewegung, der Stempel 47 fährt nach unten gegen das Trapezprofilband 38 und preßt die zwischen Stempel 47 und Profilband 38 befindliche Länge des Folienbandes 49 auf das Profilband 38, wobei noch etwas Folienband 49 von der Abwickelrolle 48 abgezogen wird, das Messer 52 fährt nach unten und schneidet den auf das Trapezprofilband 38 aufkaschierten Folienabschnitt 37 von dem Folienband 49 auf der Abwickelrolle 48 ab, der Stempel 47 bewegt sich von dem Trapezprofilband 38 wieder nach oben, und schließlich fährt der Wagen 45 mit Stempel 47, Abwickelrolle 48, Greifzange 51 und Messer 52 in seine Ausgangsstellung zurück.

## Patentansprüche

1. Vorrichtung zum abschnittsweisen Auftragen eines Trennmittels auf die Innenseite eines unteren Profilblechbandes in einer Anlage zur Herstellung von wärmedämmenden und lastabtragenden Sandwich-Dachelementen mit einem Kunststoff-Hartschaumkern sowie einer unteren und einer oberen Deckschale aus Stahlblech, wobei die Vorrichtung zum Auftragen des Trennmittels vor einer Doppelformstrecke angeordnet ist, die durch ein unteres und ein oberes endloses, angetriebenes Plattenband, zwei Seitendichtketten sowie auf dem unteren Plattenband aufliegende und mit diesem umlaufende, endlose Stützketten gebildet wird, die das untere Profilblechband von zwei mit Profilwalzmaschinen hergestellten, mit Abstand parallel übereinander in die Doppelformstrecke einlaufenden Profilblechbändern gegen den Schäumdruck des Kunststoffs abstützen, der - in Fertigungsrichtung gesehen - hinter der Vorrichtung zum Auftragen des Trennmittels auf das untere Profilblechband vor Eintritt desselben in die Doppelformstrecke auf das Band aufgebracht wird und der den Raum zwischen unterem und oberem Profilblechband in einer Reaktionszone der Doppelformstrecke ausschäumt, und wobei für einen überlappenden Querstoß an einer Querkante der Dachelemente, die von dem aus der Doppelformstrecke austretenden Sandwich-Profilblechstrang abgelängt werden, ein Abschnitt der unteren Deckschale und ein durch die Wirkung des Trennmittels nicht an der oberen Deckschale haftendes Segment des Hartschaumkerns von den Dachelementen abgetrennt werden, gekennzeichnet durch eine Maschine (36) zum Aufkaschieren von Folienabschnitten (37) quer zur Fertigungsrichtung (a) auf die Innenseite (38a) des unteren profilierten Blechbandes (Trapezprofilband 38) zum Heraustrennen der Folienabschnitte (37) zusammen mit Segmenten (40) des Hartschaumkerns (30) und Abschnitten (29a) der unteren Deckschale (29) an einer Querkante der gefertigten Dachelemente (27a), mit einem beim Kaschiervorgang mit dem profilierten Band (38) mitlaufenden und nach dem Aufkaschieren der Folienabschnitte (37) in seine Ausgangsstellung zurückfahrbaren Stempel (47) zum Aufkaschieren der Folienabschnitte (37), einer zusammen mit dem Stempel (47) verfahrbaren Abwickelrolle (48) für Folienband (49) sowie Vorrichtungen (Greifzange 51, Messer 52) zum Abziehen des Folienbandes (49) von der Abwickelrolle (48) unter den Stempel (47) und zum Abschneiden der aufzukaschierenden Folienabschnitte (37).

2. Vorrichtung nach Anspruch 1, gekennzeichnet durch ein Grundgestell (41) sowie einen auf dem Gestell (41) mittels eines Linearantriebs (42) in und entgegen der Fertigungsrichtung (a) über einem Rollgang (43) in der Fertigungslinie (44-44) verfahrbaren Wagen (45) mit einem Querrahmen (46), an dem der Stempel (47) zum Aufkaschieren der Folienabschnitte (37) auf dem unteren profilierten Blechband (Trapezprofilband 38), die Abwickelrolle (48) für das Folienband (49), ein quer zur Fertigungsrichtung (a) motorisch verfahrbarer Schlitten (50) mit einer Greifzange (51) zum Abziehen des Folienbandes (49) von der Abwickelrolle (48) sowie ein Messer (52) zum Abschneiden der aufzukaschierenden Folienabschnitte (37) von dem von der Abwickelrolle (48) abgezogenen Folienband (49) angeordnet sind, wobei das Messer (52) zum Abschneiden der Folienabschnitte (37) entsprechend den verschiedenen Breitenabmessungen (53) des unteren profilierten Blechbandes (38) zur Herstellung unterschiedlich breiter Sandwich-Dachelemente (27a) quer zur Fertigungsrichtung (a) verstellbar ist.

3. Vorrichtung nach Anspruch 1 und 2, dadurch gekennzeichnet, daß der Stempel (47) der Kaschiermaschine (36) aus auswechselbaren Stempelsegmenten (54, 55) besteht, deren Form dem Profil des unteren Blechbandes (Trapezprofilband 38) angepaßt ist, das bei den von dem Sandwich-Profilblechstrang (21) abgelängten Dachelementen (27a) die obere Deckschale (28) bildet.

4. Vorrichtung nach Anspruch 3, dadurch gekennzeichnet, daß die Stempelsegmente (54, 55) der Kaschiermaschine (1) Beläge (56) und Ansätze (57) aus einem elastischen Material wie Kunststoff oder Gummi aufweisen.

5. Vorrichtung nach einem der Ansprüche 1 bis 4, gekennzeichnet durch einen Pneumatikantrieb der Stempelsegmente (54, 55).

6. Vorrichtung nach einem der Ansprüche 1 bis 5, gekennzeichnet durch einen Pneumatikantrieb des Schlittens (50) zur Querbewegung der das Folienband (49) von der Abwickelrolle (48) abziehenden Greifzange (51).

7. Vorrichtung nach einem der Ansprüche 1 bis 6, gekennzeichnet durch eine der Abwickelrolle (48) für das Folienband (49) nachgeordnete Spann- und Umlenkrolle (58).

8. Vorrichtung nach einem der Ansprüche 1 bis 7, dadurch gekennzeichnet, daß das Folienband (49) mit einem temperaturbeständigen Kleber beschichtet ist und daß in das Folienband (49) Aufreißfäden (39) mit gleichem Abstand eingearbeitet sind.
